# FASCICULE DE BREVET EUROPEEN

(11) **EP 2 969 667 B1**
(45) Date de publication et mention de la délivrance du brevet: **20.09.2017**
(21) Numéro de dépôt: 14720171.9
(22) Date de dépôt: 13.03.2014
(51) Int. Cl.: B60R 25/20, B60R 25/04

(54) **PROCEDE DE MISE A DISPOSITION D'UN VEHICULE ET SYSTEME DE MISE A DISPOSITION CORRESPONDANT**
VERFAHREN ZUM BEREITSTELLEN EINES FAHRZEUGES UND ENTSPRECHENDES SYSTEM ZUM BEREITSTELLEN
METHOD OF MAKING A VEHICLE AVAILABLE AND CORRESPONDING SYSTEM FOR MAKING A VEHICLE AVAILABLE

(30) Priorité: 13.03.2013 FR 1352213
(43) Date de publication de la demande: 20.01.2016
(73) Titulaire: Renault S.A.S., 92100 Boulogne-Billancourt (FR)
(72) Inventeur: FERRIERES, Lionel, F-91190 Gif Sur Yvette (FR); LEVALLOIS, Eugénie, F-78000 Versailles (FR); DUBOIS, Jean-Marc, F-78910 Tacoignieres (FR)
(86) Numéro de dépôt international: PCT/FR2014/050576
(87) Numéro de publication internationale: WO 2014/140490

(56) Documents cités:
- EP-A2- 1 977 939
- EP-A2- 2 397 996
- WO-A1-2008/044087
- DE-B3- 10 339 476
- JP-A- 2011 044 112
- US-A1- 2012 313 796

## Description

La présente invention se rapporte de manière générale au domaine de l'automobile, et concerne plus précisément un procédé de mise à disposition d'un véhicule auprès d'un utilisateur, notamment dans le cadre d'un service d'auto-partage ou de location de véhicules.

Dans la plupart des services de location ou d'auto-partage de véhicules, un utilisateur voulant réserver un véhicule doit récupérer la clef ou le badge du véhicule auprès d'un gestionnaire du service louant ou partageant ce véhicule, ce qui est contraignant pour l'utilisateur et le gestionnaire. Il est à noter que la clef ou respectivement le badge sont l'identifiant usuel de l'utilisateur permettant le démarrage pour un véhicule à clef ou respectivement un véhicule sans clef. Ce dernier type de véhicule utilise un badge qui est identifié par un calculateur du véhicule pour autoriser le démarrage du véhicule, celui-ci s'effectuant ensuite par appui sur un bouton de démarrage.

Pour lever ce frein à la généralisation des services d'auto-partage et de location de véhicules, il a été imaginé des systèmes permettant la mise à disposition d'un véhicule en auto-partage ou en location sans remise de clef ou de badge. Tel est le cas par exemple des systèmes d'auto-partage décrit dans les demandes JP2011044112 et CN101833729, dans lesquelles la réservation se fait en ligne par téléphone mobile en utilisant un réseau public de données du type Internet. Ensuite le téléphone mobile communique avec le véhicule pour identifier l'utilisateur et déverrouiller les portes du véhicule.

Ces systèmes présentent néanmoins l'inconvénient de nécessiter un équipement embarqué dans le véhicule et spécifique à la location ou l'auto-partage pour identifier l'utilisateur, ce qui est coûteux et contraignant dans la perspective de l'industrialisation de tels équipements.

De plus ces équipements sont souvent visibles de l'extérieur et facilement contournables pour permettre le démarrage du véhicule. C'est le cas par exemple lorsqu'un tel équipement contient le badge du véhicule ou lorsqu'il comporte un simple relai ouvert pour empêcher le démarrage du véhicule avec la clef de contact avant l'identification de l'utilisateur.

La demande de brevet WO2008044087 divulgue un système de partage d'un véhicule équipé d'un module de communication avec un serveur distant. Le module de communication authentifie l'utilisateur qui demande l'accès au véhicule avec un dispositif portable, en comparant un code généré avec les données utilisateur préalablement envoyées par le serveur distant, et les données utilisateur reçues du dispositif de l'utilisateur. Le déverrouillage du véhicule est effectué par l'unité de contrôle du véhicule après vérification de l'identité de l'utilisateur et de son droit d'accès. Le démarrage est effectué par le véhicule quand celui-ci détecte la présence du conducteur dans la cabine.

La demande de brevet français FR1259499 décrit un système d'auto-partage dans lequel un utilisateur déverrouille les portes d'un véhicule en auto-partage à distance, en faisant appel à un serveur distant depuis son téléphone mobile. Cet ordre de déverrouillage permet, une fois la clef de contact mise, (dans le cas d'un véhicule à clé) ou une fois l'autorisation de démarrage obtenue (dans le cas d'un véhicule sans clé), de démarrer le véhicule au moyen de la clé ou d'appui sur le bouton de démarrage pour les véhicules sans clé. De plus le serveur distant doit à la fois identifier l'utilisateur et le véhicule en auto-partage. Ce système présente donc les inconvénients de ne pas assurer la sécurité du véhicule entre l'instant du déverrouillage des portes et celui du démarrage, et de nécessiter l'intégration dans un serveur de gestion de véhicules, souvent spécifique à un constructeur de véhicules, le service d'auto-partage.

Un des buts de l'invention est de remédier à au moins une partie des inconvénients de la technique antérieure en fournissant un procédé et un système de mise à disposition d'un véhicule sans remise de clef, qui fournissent un bon niveau de sécurité pour le propriétaire du véhicule, et ne nécessitent pas de boîtier spécifique embarqué pour l'auto-partage partage en supplément du boîtier télématique standard TCU (d'après l'anglais « Telematic Control Unit ») développé pour les véhicules communiquants standards.

A cette fin, l'invention propose un procédé de mise à disposition d'un véhicule, comportant une étape d'envoi d'un message permettant la décondamnation d'au moins une portière du véhicule depuis un serveur distant de gestion de véhicules, suite à une requête utilisateur, ladite requête utilisateur ayant fait l'objet d'une identification dudit utilisateur et d'une autorisation d'utilisation par ledit utilisateur dudit véhicule, ledit procédé comportant en outre une étape d'envoi d'un message indépendant dudit message permettant ladite décondamnation, autorisant le démarrage du véhicule auprès d'un système de contrôle dudit véhicule depuis ledit serveur distant de gestion de véhicules, ledit procédé étant caractérisé en ce que l'identification et l'autorisation d'utilisation sont effectués par un serveur utilisateur distant distinct dudit serveur distant de gestion de véhicules,
- ledit message permettant la décondamnation d'au moins une portière étant envoyé par ledit serveur distant de gestion de véhicules audit véhicule sur réception d'un message de décondamnation envoyé par ledit serveur utilisateur distant après une étape de traitement de ladite requête utilisateur par ledit serveur utilisateur distant,
- ledit message autorisant le démarrage dudit véhicule étant envoyé par ledit serveur distant de gestion de véhicules audit véhicule sur réception d'un message de dé-protection envoyé par ledit serveur utilisateur distant,
lesdits messages de décondamnation et de dé-protection envoyés par ledit serveur utilisateur distant audit serveur distant de gestion de véhicules étant dépourvus d'un identifiant dudit utilisateur.

Il est à noter que dans cette demande le terme « distant » appliqué à un serveur signifie à distance du véhicule et de l'utilisateur, et le terme « décondamnation » s'applique au déverrouillage électrique d'une portière de véhicule.

Grâce à l'invention, la réservation du véhicule en auto-partage s'effectue en ligne par exemple via un téléphone mobile ou un terminal fixe, et sans équipement spécifique pour l'auto-partage dans le véhicule, celui-ci n'ayant pas besoin d'intervenir dans l'identification de l'utilisateur. Il est en effet à noter que de plus en plus de véhicules récents sont dotés d'un boîtier de télécommunication permettant de remonter à un serveur distant des données concernant le véhicule, mais aussi à ce serveur distant d'activer certaines fonctions du véhicule à distance. Ainsi le procédé de mise à disposition selon l'invention utilise des briques de service déjà existantes dans des véhicules non destinés initialement à l'auto-partage, ce qui facilite la mise en oeuvre de ce procédé par des utilisateurs particuliers.

Contrairement aux systèmes de l'art antérieur, dans l'invention la décondamnation des portes du véhicule à distance ne permet pas le démarrage du véhicule. En effet le démarrage du véhicule nécessite la réception par celui-ci d'un autre message que le message permettant cette décondamnation, également envoyé à distance au véhicule, cet autre message étant ledit message autorisant le démarrage du véhicule. Ainsi l'utilisateur est assuré que la décondamnation des portes du véhicule à distance, si elle n'est pas faite à proximité du véhicule, ne mette pas celui-ci à la disposition d'une autre personne qui s'en accaparerait. De même, en supposant que la clef de contact ou le badge du véhicule est dans la boîte à gant du véhicule lorsque celui-ci est laissé en auto-partage, le fait pour un tiers de s'emparer de cette clef ou de ce badge par effraction ne lui permet pas de démarrer le véhicule.

La dé-protection signifie dans cette demande le déverrouillage à distance du système de contrôle, autorisant le démarrage du véhicule.

L' interface entre le serveur utilisateur distant et le serveur distant de gestion de véhicules permet à ce dernier serveur distant d'appartenir par exemple au constructeur du véhicule à mettre en auto-partage, et au serveur utilisateur distant d'être un serveur web développé par le propriétaire du véhicule (particulier ou opérateur de service). Ainsi cette caractéristique de l'invention favorise le développement d'applications d'auto-partage par des non spécialistes du domaine automobile, par exemple des utilisateurs particuliers qui peuvent ainsi mettre leur véhicule en auto-partage seulement lors de créneaux qui leur conviennent.

Selon une autre caractéristique avantageuse du procédé de mise à disposition d'un véhicule selon l'invention, ledit serveur distant de gestion de véhicules n'envoie ledit message autorisant le démarrage dudit véhicule que lorsque ledit serveur utilisateur distant a reçu dudit utilisateur une valeur d'un paramètre variable relatif audit véhicule, et en ce que ladite valeur correspond à une valeur précédemment enregistrée par ledit serveur distant de gestion de véhicules ou par ledit serveur utilisateur distant.

Ainsi l'autorisation de démarrage n'est donnée par le système de contrôle d'un moteur du véhicule que lorsque l'utilisateur fournit au serveur utilisateur distant une valeur relative au véhicule telle que le kilométrage affiché sur le compteur du véhicule, ou le niveau de carburant du véhicule, ou encore le niveau de charge d'une batterie de traction du véhicule. Cela permet de ré-identifier l'utilisateur lorsque cette autorisation est donnée, et de donner cette autorisation lorsque l'utilisateur est à proximité voire dans le véhicule, puisque la valeur à fournir nécessite de visualiser le tableau de bord du véhicule. Ainsi les risques de vol du véhicule après la décondamnation de ses portières sont réduits. On entend ici par valeur relative au véhicule une valeur fournie par le véhicule, qui est donc éventuellement une valeur aléatoire affichée sur un écran multimédia du véhicule.

Selon une autre caractéristique avantageuse du procédé de mise à disposition d'un véhicule selon l'invention, ledit système de contrôle dudit véhicule n'autorise le démarrage dudit véhicule qu'après identification d'une clef ou d'un badge dudit véhicule, et réception par ledit véhicule desdits messages permettant la décondamnation d'au moins une portière et autorisant le démarrage dudit véhicule.

Selon une autre caractéristique avantageuse du procédé de mise à disposition d'un véhicule selon l'invention, ledit serveur distant de gestion de véhicules n'envoie ledit message autorisant le démarrage dudit véhicule qu'après détection d'une ouverture manuelle d'une portière dudit véhicule.

Cette caractéristique permet de s'assurer que l'utilisateur a pu récupérer la clef ou le badge du véhicule avant d'autoriser le démarrage du véhicule, ce qui permet de sécuriser la procédure de mise à disposition du véhicule. Cette détection peut s'effectuer par exemple par le véhicule qui communique avec le serveur distant via son boîtier télématique standard.

Le système de contrôle autorisant le démarrage du véhicule est contenu dans un calculateur vérifiant de multiples critères de démarrage, parmi lesquels l'identification réussie de la clef de contact ou du badge du véhicule, le bon fonctionnement des calculateurs sécuritaires du véhicule, etc. La clef ou le badge est mis à disposition de l'utilisateur du véhicule à partager par exemple dans la boîte à gant du véhicule. Grâce à l'ajout dans les critères de démarrage, de la réception des deux messages indépendants permettant la décondamnation puis la dé-protection du véhicule, envoyés par le serveur distant de gestion de véhicules, on diminue les risques de piratage du système par émulation de l'un des critères de démarrage.

Selon une autre caractéristique avantageuse du procédé de mise à disposition d'un véhicule selon l'invention, ledit serveur utilisateur distant n'autorise pas la libération dudit véhicule par ledit utilisateur tant que ledit serveur utilisateur distant:
- ne détecte pas la disponibilité d'un réseau de communication permettant audit véhicule de communiquer avec ledit serveur distant de gestion de véhicules,
- et/ou ne reçoit pas un message de validation d'inventaire de la part dudit utilisateur.

Ainsi lors de la libération du véhicule par l'utilisateur, c'est-à-dire lorsque l'utilisateur souhaite rendre le véhicule auto-partagé, le serveur distant de gestion de véhicules pourra re-protéger le véhicule à distance, après vérification par le serveur utilisateur distant du bon état du véhicule. Il est à noter que l'utilisateur n'utilise pas forcément le même réseau de communication que le boîtier télématique standard du véhicule, et il se peut donc qu'il demande la libération du véhicule par téléphone dans un lieu où le véhicule n'est pas en mesure communiquer avec le serveur distant de gestion de véhicules.

Selon une autre caractéristique avantageuse du procédé de mise à disposition d'un véhicule selon l'invention, ledit procédé comporte une étape préalable de réservation dudit véhicule par ledit utilisateur, au cours de laquelle ledit utilisateur fournit audit serveur utilisateur distant une valeur permettant de temporiser d'une durée prédéterminée l'envoi dudit message permettant la décondamnation d'au moins une portière du véhicule.

Ainsi, si l'utilisateur demande la mise à disposition du véhicule en auto-partage alors qu'il pense rejoindre le véhicule plusieurs minutes après, il lui est possible de retarder la décondamnation du véhicule afin d'avoir le temps de rejoindre le véhicule avant que ses portières ne se déverrouillent. Cela lui permet également de prévenir le temps d'attente entre l'envoi d'une requête de mise à disposition par téléphone et la décondamnation du véhicule, dû par exemple aux lenteurs du réseau de télécommunication. Cela lui permet également de demander la mise à disposition du véhicule dans un endroit éloigné du véhicule sans prendre de risques, par exemple si à l'endroit où est garé le véhicule, le terminal mobile de l'utilisateur capte mal le réseau de télécommunication avec lequel il est compatible. La responsabilité de l'évaluation du temps qui doit s'écouler entre la demande de la mise à disposition du véhicule et la décondamnation du véhicule est de plus ainsi transférée au libre arbitre de l'utilisateur.

Selon une autre caractéristique avantageuse du procédé de mise à disposition d'un véhicule selon l'invention, l'étape d'envoi d'un message permettant la décondamnation d'au moins une portière du véhicule n'a lieu qu'après une étape de détermination de la distance entre l'utilisateur et ledit véhicule, et si la distance déterminée lors de ladite étape de détermination est inférieure à un seuil prédéterminé.

Cette caractéristique permet de diminuer le délai entre la mise à disposition du véhicule à l'utilisateur et la décondamnation du véhicule, afin de limiter les risques de vol du véhicule ou à l'intérieur du véhicule avant la prise en main du véhicule par l'utilisateur.

Selon une autre caractéristique avantageuse du procédé de mise à disposition d'un véhicule selon l'invention, sur réception par ledit véhicule dudit message permettant la décondamnation d'au moins une portière du véhicule, ledit véhicule inhibe une fonction de signalisation visuelle et/ou sonore d'ouverture des portes.

Ainsi on ne signale pas aux alentours la décondamnation du véhicule, ce qui limite également les risques de vol du véhicule ou à l'intérieur du véhicule avant la prise en main du véhicule par l'utilisateur.

L'invention concerne aussi un système de mise à disposition d'un véhicule comportant des moyens pour mettre en oeuvre le procédé de mise à disposition d'un véhicule selon l'invention, lesdits moyens comportant :
- un serveur utilisateur distant apte à identifier un utilisateur et à autoriser l'utilisation dudit véhicule par ledit utilisateur sur réception d'une requête utilisateur, et un serveur distant de gestion de véhicules distinct dudit serveur utilisateur distant, le dit serveur utilisateur distant étant apte à communiquer avec le serveur distant de gestion de véhicules,
- ledit serveur distant de gestion de véhicules, apte à envoyer audit véhicule un message permettant la décondamnation d'au moins une portière dudit véhicule suite à la réception d'un message de décondamnation envoyé par le dit serveur utilisateur distant,
- ledit serveur distant de gestion de véhicules étant apte à envoyer audit véhicule un message indépendant dudit message permettant ladite décondamnation, autorisant le démarrage dudit véhicule auprès d'un système de contrôle dudit véhicule, sur réception d'un message de dé-protection envoyé par le serveur utilisateur distant.

L'invention concerne enfin un programme d'ordinateur comportant des instructions pour mettre en oeuvre le procédé de mise à disposition d'un véhicule selon l'invention, lorsqu'il est exécuté sur un ou plusieurs processeurs.

Le système de mise à disposition d'un véhicule selon l'invention et le programme d'ordinateur selon l'invention présentent des avantages analogues à ceux du procédé de mise à disposition d'un véhicule selon l'invention.

D'autres caractéristiques et avantages apparaîtront à la lecture d'un mode de réalisation préféré décrit en référence aux figures dans lesquelles :
- la figure 1 représente un système de mise à disposition d'un véhicule selon l'invention dans ce mode de réalisation préféré,
- la figure 2 représente des étapes d'un procédé de mise à disposition d'un véhicule selon l'invention dans ce mode de réalisation préféré,
- et la figure 3 représente d'autres étapes du procédé de mise à disposition d'un véhicule selon l'invention dans ce mode de réalisation préféré.

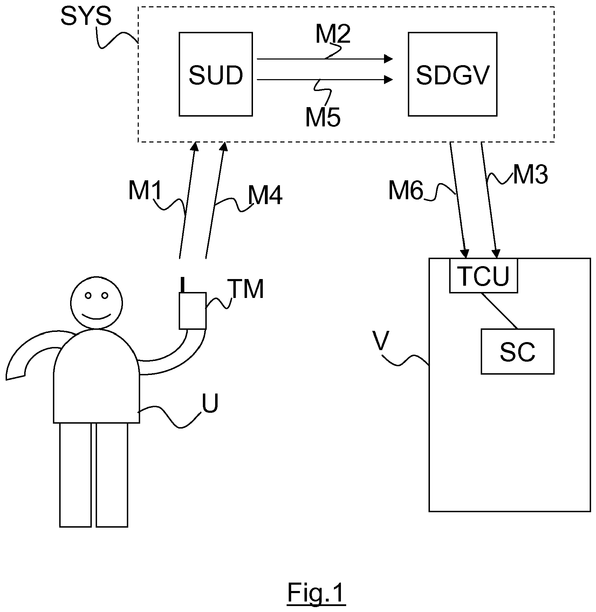

Selon un mode préféré de réalisation de l'invention représenté à la **figure 1****,** un système SYS de mise à disposition d'un véhicule selon l'invention comporte deux serveurs, un serveur utilisateur distant SUD dédié à la gestion d'utilisateurs de l'invention, et un serveur distant de gestion de véhicules SDGV, dédié à la gestion à distance de véhicules.

Le serveur SUD comporte des moyens d'identification et d'authentification d'utilisateurs tels que l'utilisateur U, ainsi que des moyens de traitement de requêtes envoyées par ces utilisateurs. Le serveur SUD est par exemple un serveur web développé par le propriétaire d'un véhicule V (qui peut être un particulier ou une société de services), ou un serveur d'une société d'auto-partage ou de location de voitures. Il comporte des moyens de gestion de réservation d'un véhicule ou d'une flotte de véhicules, des moyens de taxation des utilisateurs, ainsi que des moyens de communication avec un ou plusieurs serveurs tels que le serveur SDGV, qui est par exemple un serveur d'un constructeur de véhicules, apte à communiquer à distance avec des dispositifs de communication embarqués dans les véhicules qu'il gère à distance, tels qu'un dispositif de communication TCU du véhicule V.

Les moyens de communication entre le serveur SUD et le serveur SDGV comportent dans ce mode de réalisation une interface informatique de type API (d'après l'anglais « Application Programming Interface »), mais d'autres types d'interfaces telles qu'une interface basée sur des messages courts ou SMS (d'après l'anglais « Short Message Service ») sont également utilisables. L'interface entre le serveur SUD et le serveur SDGV utilise par exemple un bus objet de type CORBA (d'après l'anglais « Common Object Request Broker Architecture»), ou encore SOAP (d'après l'anglais « Simple Object Access Protocol »), permettant un codage simple au niveau du serveur SUD de requêtes vers le serveur SDGV en langage XML (d'après l'anglais « eXtended Markup Language ») ou Java. Ces requêtes sont principalement :
- une requête « unlock » demandant au serveur SDGV de déverrouiller à distance les portes d'un véhicule mis en partage ou en location, et identifié dans cette requête par un identifiant constructeur VIN (d'après l'anglais « Vehicle Identification Number »),
- et une requête « unprotect » demandant au serveur SDGV d'autoriser le démarrage à distance d'un véhicule mis en partage ou en location, et identifié dans cette requête par un identifiant constructeur VIN (d'après l'anglais « Vehicle Identification Number »).

D'autres requêtes sont également utilisables, notamment pour permettre à un serveur ou plusieurs serveurs tels que le serveur SUD de s'enregistrer auprès du serveur SDGV, pour identifier et authentifier ces serveurs, mais également pour :
- notifier le serveur SDGV qu'un véhicule est entré en mode partage ou location, afin d'activer certaines fonctions du véhicule à distance, telles que la nécessité pour le système de démarrage d'un moteur de ce véhicule de recevoir une autorisation du serveur SDGV pour démarrer ; en effet quand le véhicule est en mode partage ou location, son anti-démarrage est protégé à distance parce que la clef ou le badge du véhicule est présent dans le véhicule mais rendu « inerte » (par cette protection à distance) pour qu'il ne puisse pas démarrer le véhicule. C'est donc à distance que le serveur SDGV autorisera le démarrage du véhicule à certaines conditions ;
- notifier le serveur SDGV qu'un véhicule est sorti du mode partage ou location, afin de désactiver les fonctions ci-dessus propres au mode partage ou location ;
- demander au serveur SDGV de localiser un véhicule ;
- demander au serveur SDGV de verrouiller à distance les portes d'un véhicule (en mode partage ou location) ;
- ou encore demander au serveur SDGV d'empêcher le démarrage à distance d'un véhicule tant que celui-ci n'aura pas reçu un message d'autorisation du serveur SDGV (en mode partage ou location).

Le système SYS de mise à disposition d'un véhicule selon l'invention permet à l'utilisateur U de réserver en ligne, grâce par exemple à un terminal mobile TM, le véhicule V mis en location ou en auto-partage.

Le terminal mobile TM est par exemple un téléphone doté d'une puce GSM (d'après l'anglais « Global System for Mobile ») ou UMTS (d'après l'anglais « Universal Mobile Télécommunications System»), ou encore un ordinateur portable ou un assistant personnel doté de moyens de connexion Wi-Fi utilisant la norme IEEE 802.11. Il permet à l'utilisateur U d'utiliser un réseau de communication sans fil pour échanger des données avec le serveur SUD par l'intermédiaire d'une interface web. En variante le serveur SUD possède des moyens de reconnaissance vocale permettant de communiquer avec l'utilisateur U par l'intermédiaire d'une connexion téléphonique analogique et/ou numérique. Dans une autre variante, l'utilisateur téléphone à un agent d'un service d'auto-partage ou de location qui entre informatiquement les requêtes utilisateur dans le serveur SUD.

Le véhicule V comporte un dispositif TCU de communication permettant d'envoyer des données au serveur SDGV, et de recevoir des données du serveur SDGV. Les données envoyées par le dispositif TCU sont notamment la localisation du véhicule V, son niveau de carburant s'il comporte un moteur thermique et/ou le niveau de charge d'une batterie de traction s'il comporte un moteur électrique, son kilométrage, des messages d'alerte éventuels, la date d'un prochain entretien à effectuer, etc. Pour cela le dispositif TCU de communication comporte une puce GSM ou UMTS permettant d'envoyer des messages courts au serveur SDGV, qui comporte une interface de communication avec le réseau téléphonique. En variante, le dispositif TCU de communication communique par messages USSD (d'après l'anglais «Unstructured Supplementary Service Data ») avec le serveur SDGV, ou encore par requêtes HTTPS sur une connexion de données IP activée par exemple sur réception d'un message court si le dispositif TCU de communication comporte une puce de communication de troisième génération.

Le dispositif TCU de communication est relié par un bus de données CAN (d'après l'anglais « Controller Area Network ») à un système SC de contrôle du véhicule V, conditionnant le démarrage du véhicule V. Ce système de contrôle SC est un calculateur du véhicule dialoguant avec d'autres calculateurs du véhicule tels que le calculateur principal du véhicule, contrôlant le ou les moteurs du véhicule V. Le système de contrôle SC vérifie plusieurs conditions avant d'autoriser le démarrage du véhicule V. Ces conditions comprennent par exemple le déverrouillage de la colonne de direction, le bon démarrage de calculateurs sécuritaires du véhicule, l'identification de la clef de contact ou du badge du véhicule. Selon l'invention, lorsque le véhicule V est en auto-partage, le système de contrôle SC n'autorise pas le démarrage du véhicule tant que celui-ci n'a pas reçu du serveur SDGV par l'intermédiaire du dispositif TCU de communication :
- d'une part un premier message autorisant la décondamnation des portières du véhicule V,
- et d'autre part un deuxième message différent du premier, autorisant le démarrage du véhicule V.

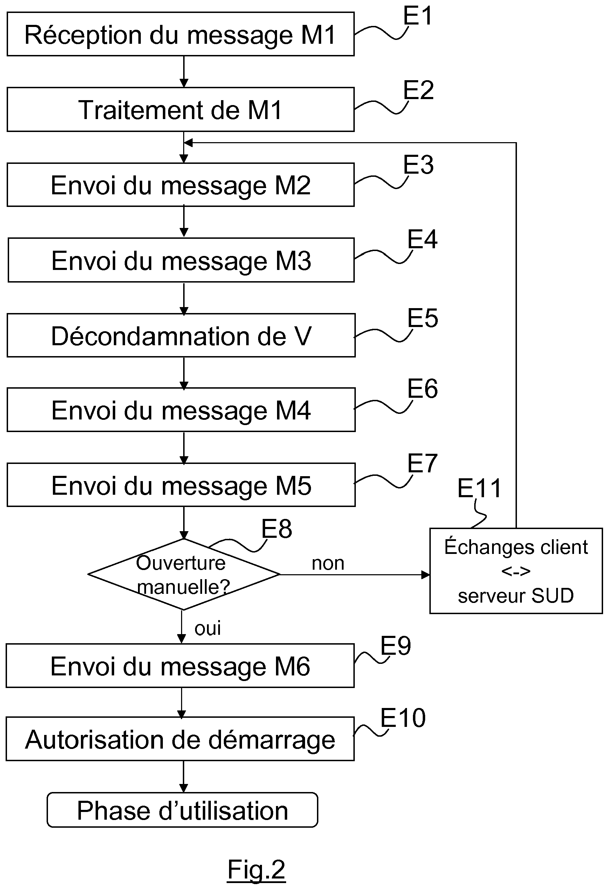

En référence à la **figure 2****,** un procédé de mise à disposition du véhicule V selon l'invention est représenté sous la forme d'un algorithme comportant des étapes E1 à E11.

La plupart des étapes de ce procédé sont mises en oeuvre, dans ce mode de réalisation, de manière logicielle et/ou matérielle par le système SYS selon l'invention, c'est-à-dire par l'un ou l'autre des serveurs SUD et SDGV. Certaines étapes sont mises en oeuvre par le véhicule V lui-même.

L'étape E1 est la réception d'un message M1 par le serveur utilisateur distant SUD. Ce message M1 est une requête utilisateur envoyée par le terminal mobile TM, demandant la mise à disposition du véhicule V réservé par exemple lors d'un échange précédent entre l'utilisateur U et le serveur utilisateur distant SUD. Cette requête utilisateur comprend éventuellement une durée de temporisation choisie par l'utilisateur U pour retarder la décondamnation des portières du véhicule V de cette durée de temporisation après réception du message M1 par le serveur SUD. Cette durée est par exemple choisie par l'utilisateur U sur une interface graphique de son terminal mobile TM. Ainsi l'utilisateur U choisit par exemple une décondamnation des portes 10, 15, 20, ou 30 secondes, ou encore une minute à quelques minutes après l'envoi du message M1, pour lui permettre de rejoindre le véhicule V avant cette décondamnation.

L'étape suivante E2 est le traitement de la requête utilisateur reçue dans le message M1, par le serveur utilisateur distant SUD. Dans cette étape, le serveur distant SUD identifie et authentifie l'utilisateur U par son numéro de téléphone et/ou par un identifiant et un mot de passe de connexion à un site d'auto-partage ou de location hébergé par le serveur distant SUD. Puis le serveur distant SUD vérifie la disponibilité et l'état du véhicule V avant d'autoriser l'utilisateur U à l'utiliser. On suppose, dans cet exemple de réalisation de l'invention, que l'utilisateur U a été identifié, authentifié et autorisé à utiliser le véhicule V. L'utilisateur reçoit éventuellement dans cette étape E2, une confirmation d'autorisation à utiliser le véhicule V de la part du serveur utilisateur distant SUD.

L'étape suivante E3 est l'envoi d'un message M2 par le serveur utilisateur distant SUD au serveur distant de gestion de véhicules SDGV, éventuellement à l'expiration de la durée de temporisation reçue à l'étape E1 si une telle durée de temporisation était contenue dans le message M1. Ce message M2 est une requête « unlock » demandant la décondamnation des portières du véhicule V. Cette requête comporte l'identifiant VIN du véhicule V mais ne comporte pas d'identifiant de l'utilisateur U, celui-ci étant géré uniquement par le serveur utilisateur distant SUD. En variante, le message M2 envoyé par le serveur utilisateur distant SUD au serveur distant de gestion de véhicules SDGV contient la durée de temporisation éventuellement reçue dans le message M1, et c'est donc le serveur distant de gestion de véhicules SDGV qui gèrera la temporisation de l'envoi d'un message M3 à l'étape E4, au lieu que cette temporisation soit gérée par le serveur utilisateur distant SUD.

L'étape suivante E4 est l'envoi d'un message M3 par le serveur distant de gestion de véhicules SDGV au dispositif de communication TCU du véhicule V, ce message M3 étant une requête de décondamnation des portières du véhicule V. Cette étape est éventuellement conditionnée par la vérification que l'utilisateur U est à moins de 500 mètres du véhicule V. D'autres seuils de distance peuvent bien entendu être utilisés. Pour effectuer cette vérification, le serveur utilisateur distant SUD localise le terminal mobile TM de l'utilisateur U, en utilisant par exemple un serveur de localisation d'un opérateur téléphonique, et envoie la position de l'utilisateur U dans le message M3. Il est à noter que le serveur distant de gestion de véhicules SDGV connaît la position du véhicule V grâce aux données envoyées par le dispositif de communication TCU du véhicule V. En variante la vérification que l'utilisateur U est à moins de 500 mètres du véhicule V est effectuée par le serveur utilisateur distant SUD, la position du véhicule V étant alors envoyée par le serveur distant de gestion de véhicules SDGV au serveur utilisateur distant SUD. Cette géo-localisation de l'utilisateur U et du véhicule V est bien sûre optionnelle car nécessitant une bonne précision de positionnement, l'idéal étant que l'utilisateur U soit équipé d'un téléphone mobile avec GPS (d'après l'anglais « Global Positionning System) intégré. De plus il n'est pas toujours possible de géo-localiser au moins correctement l'utilisateur U, par exemple s'il est dans un sous-sol.

L'étape suivante E5 est la décondamnation du véhicule V, c'est-à-dire en pratique le déverrouillage électrique de tous ses ouvrants. Cette étape est effectuée par le véhicule V lui-même à la réception du message M3. Le véhicule inhibe préférentiellement la signalisation visuelle et/ou sonore de décondamnation des portières habituellement mise en oeuvre lorsque cette décondamnation est déclenchée par la clef de contact ou le badge du véhicule V.

L'étape suivante E6 est l'envoi d'un message M4 du terminal mobile TM au serveur utilisateur distant SUD. Ce message M4 comporte la valeur du kilométrage du véhicule V affichée sur son tableau de bord, l'utilisateur l'ayant entrée dans son terminal mobile TM puis envoyée par l'intermédiaire d'une interface graphique appropriée lui demandant de rentrer cette donnée. En variante une ou d'autres données relatives au véhicule V peuvent être demandées à la place du kilométrage ou en plus de celui-ci, par le serveur utilisateur distant SUD, ou par une application logicielle hébergée dans le terminal mobile TM, à l'utilisateur. Ces données permettent de s'assurer que l'utilisateur est bien dans le véhicule ou très proche de lui lorsque l'autorisation de démarrage sera donnée. Elles sont donc préférentiellement variables, telles que le niveau de carburant du véhicule V ou son niveau de charge, mais sont éventuellement fixes, comme un numéro de plaque d'immatriculation ou un code barre spécifique au véhicule. Une donnée fixe relative au véhicule a cependant l'inconvénient de pouvoir être renseignée à distance du véhicule et à l'avance, car ne variant pas d'une utilisation à une autre du même véhicule. Une donnée aléatoire affichée par un écran multimédia du véhicule constitue de ce fait une donnée relative au véhicule plus sécuritaire dans la mesure où cette valeur peut-être générée à chaque mise à disposition du véhicule V par le serveur SDGV. Dans ce mode de réalisation de l'invention, on choisit comme valeur à saisir par l'utilisateur U à cette étape E6, la valeur du kilométrage du véhicule. Cela permet de s'assurer que l'utilisateur U a ouvert manuellement le véhicule, a récupéré la clef ou le badge du véhicule pour allumer le tableau de bord du véhicule, condition nécessaire pour obtenir cette valeur de kilométrage. Ainsi on est sûr de n'autoriser ensuite le démarrage qu'alors que l'utilisateur U a bien trouvé le véhicule et s'y est installé.

L'étape suivante E7 est l'envoi d'un message M5 depuis le serveur utilisateur distant SUD au serveur distant de gestion de véhicules SDGV. Ce message M5 est un message de dé-protection c'est-à-dire une requête « unprotect » donnant une autorisation de démarrage du véhicule V. Cette requête comporte l'identifiant VIN du véhicule V ainsi que le kilométrage reçu dans le message M4, mais ne comporte pas d'identifiant de l'utilisateur U, celui-ci étant géré uniquement par le serveur utilisateur distant SUD.

L'étape suivante E8 est la vérification par le serveur distant de gestion de véhicules SDGV de la validité du kilométrage reçu à l'étape E7, en comparant ce kilométrage à la dernière valeur de kilométrage envoyée au serveur SDGV par le dispositif de communication TCU. Cette étape valide le fait que l'utilisateur U a bien ouvert manuellement une portière du véhicule V, puisque le kilométrage n'est disponible qu'après allumage du tableau de bord.

Si à cette étape E8, le serveur distant SDGV constate que la valeur du kilométrage reçue dans le message M5 n'est pas valide, ou si le serveur distant SDGV reçoit un message du dispositif de communication TCU le notifiant du fait que le véhicule V s'est recondamné, alors on passe à l'étape E11, sinon on passe à l'étape E9. En effet il est à noter que le véhicule V recondamne automatiquement les portières du véhicule lorsqu'aucune ouverture manuelle des portières n'est détectée au bout de deux minutes après un déverrouillage électrique seulement.

L'étape E11 consiste en de nouveaux échanges entre l'utilisateur U et le serveur distant SUD, après un échec du passage à l'étape E9 c'est-à-dire que le serveur distant de gestion de véhicules SDGV n'a pas pu envoyer de message autorisant le démarrage du véhicule au dispositif de communication TCU. Cet échange consiste pour l'utilisateur U à redemander la mise à disposition du véhicule V via une nouvelle requête au serveur utilisateur distant SUD, qui résultera en l'envoi de nouveaux messages M2 à M5 et en une nouvelle vérification du kilométrage du véhicule selon les étapes E3 à E8 qui seront re-exécutées. Ces nouveaux échanges sont soit à l'initiative de l'utilisateur qui constate que les portières du véhicule V se sont re-verrouillées, soit à l'initiative du serveur utilisateur distant SUD s'il a été notifié à l'étape E8 par le serveur distant de gestion de véhicules SDGV de l'échec du passage à l'étape E9. Dans ce dernier cas le serveur utilisateur distant SUD envoie par exemple un message à l'utilisateur U sur son terminal mobile TM le notifiant de la procédure à suivre. Il est à noter que le dispositif de communication TCU n'avertit pas forcément le serveur distant de gestion de véhicules SDGV de la re-condamnation des portières du véhicule V, cette caractéristique étant optionnelle. Il faut donc que l'interface utilisateur affichée sur le terminal mobile TM soit intuitive de telle sorte que l'utilisateur U ré-envoie une requête de mise à disposition du véhicule V lorsqu'il constate que le véhicule V n'a pas été dé-condamné.

L'étape E9 est l'envoi d'un message M6 par le serveur distant de gestion de véhicules SDGV au dispositif de communication TCU du véhicule V, ce message M6 étant une autorisation de démarrage du véhicule V.

L'étape suivante E10 est l'autorisation de démarrage du véhicule V, donnée par le système de contrôle SC à au moins l'un des moteurs du véhicule V. Cette étape E10 a lieu après réception des messages M3 et M6 par le dispositif TCU de communication, et après identification/authentification de la clef de contact ou du badge du véhicule V, ainsi qu'après vérification d'autres critères de démarrage. Lorsque le dispositif TCU de communication reçoit le message M6, il transmet au système de contrôle SC cette autorisation de démarrage donnée par le serveur distant de gestion de véhicules SDGV.

Préférentiellement, les échanges de messages entre l'utilisateur U et le serveur utilisateur distant SUD, entre le serveur utilisateur distant SUD et le serveur distant de gestion de véhicules SDGV, entre le serveur distant de gestion de véhicules SDGV et le dispositif TCU de communication ainsi qu'entre le dispositif TCU de communication et le système de contrôle SC, sont cryptés. De plus, les entités de cette chaîne d'échanges s'identifient et s'authentifient mutuellement avant chaque échange de messages. Ainsi le système de contrôle SC n'autorise le démarrage du véhicule V qu'après authentification du dispositif de communication TCU, ce dispositif ayant lui-même authentifié auparavant le serveur distant de gestion de véhicules. Ces authentifications utilisent par exemple des systèmes classiques de chiffrement symétriques ou asymétriques à clef publique ou à clef privée.

A la fin de l'étape E10, on passe à une phase d'utilisation du véhicule V par l'utilisateur U, celui-ci étant alors en mesure de démarrer le véhicule V et de l'utiliser.

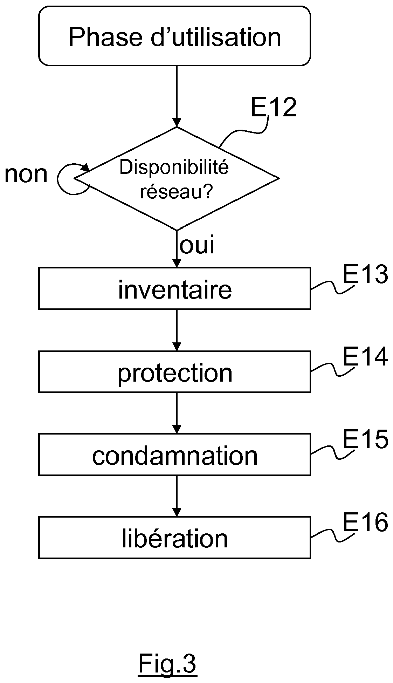

Lorsque l'utilisateur U souhaite rendre le véhicule, après une phase d'utilisation, il doit vérifier, dans une étape E12 représentée à la **figure 3****,** que le serveur distant de gestion de véhicule SDGV peut communiquer avec le dispositif de communication TCU, c'est-à-dire que le réseau de communication utilisé par le dispositif de communication TCU est disponible au niveau du véhicule V.

Il est à noter que ce réseau de communication n'est pas forcément le même que celui utilisé par le terminal mobile TM pour communiquer avec le serveur utilisateur distant SUD, et que d'autre part l'utilisateur U est guidé dans la procédure de libération du véhicule par une interface intuitive utilisable sur son terminal mobile TM. Cette interface est l'interface du service web de location ou d'auto-partage implémenté dans le serveur utilisateur distant SUD, mais l'implémentation de cette interface peut être répartie entre le terminal mobile TM et le serveur utilisateur distant SUD.

Pour vérifier la disponibilité du réseau de communication utilisé par le dispositif de communication TCU, l'utilisateur U regarde sur une interface multimédia du véhicule V, si un indicateur de disponibilité réseau est présent. Si cet indicateur est présent, il en informe le serveur utilisateur distant SUD via son terminal mobile TM. Si cet indicateur n'est pas présent, l'utilisateur U doit déplacer le véhicule V dans un lieu où le réseau de communication utilisé par le dispositif de communication TCU est disponible au niveau du véhicule V.

En variante, ou par exemple si le véhicule V n'a pas d'interface multimédia avec possibilité d'affichage d'un indicateur de disponibilité réseau, sur réception d'une requête de libération envoyée par l'utilisateur U, le serveur utilisateur distant SUD envoie une requête au serveur SDGV qui envoie un message de test au dispositif de communication TCU. Si le dispositif de communication TCU répond au serveur SDGV, alors celui-ci en informe le serveur utilisateur distant SUD et on passe à l'étape suivante E13, sinon le serveur utilisateur distant SUD demande à l'utilisateur U de déplacer le véhicule V dans un lieu où le réseau est disponible pour le dispositif de communication TCU, et on réitère l'étape E12.

L'étape E13 est une étape d'inventaire du véhicule, effectuée par l'utilisateur U. Pour cela, l'utilisateur U utilise une interface graphique sur son terminal mobile TM, qui lui permet de remplir facilement une liste de points à confirmer ou à remplir, telle que la présence des papiers du véhicule dans la boîte à gants, le bon état du véhicule, un numéro de place de parking du véhicule, etc. L'interface graphique lui permet également d'insérer des photos de parties abîmées du véhicule, et de pointer sur un modèle en trois dimensions du véhicule, une zone endommagée du véhicule. Une fois l'inventaire validé sur l'interface graphique, il est envoyé au serveur distant SUD. D'autres échanges de messages entre le serveur distant SUD et l'utilisateur sont éventuellement mis en oeuvre si l'inventaire est incomplet. L'utilisateur est éventuellement mis en relation avec un centre d'appels si l'inventaire fait remonter des problèmes bloquants pour la libération du véhicule.

Dans cette étape E13, les conditions nécessaires pour finaliser l'inventaire du véhicule V comprennent dans une variante, la nouvelle valeur du kilométrage du véhicule V. En effet, dans cette variante, la vérification de la valeur du kilométrage fournie par l'utilisateur à l'étape E6 dans le message M4 n'est pas effectuée par le serveur distant de gestion de véhicules SDGV mais par le serveur utilisateur distant SUD. Dans cette variante les étape E8 et E7 sont donc inversées puisque c'est le serveur utilisateur distant SUD qui valide le fait que l'utilisateur a bien ouvert manuellement au moins l'une des portières du véhicule V.

L'étape suivante E14 est la protection du véhicule V à distance. Dans cette étape E14, le serveur distant de gestion de véhicules SDGV reçoit une requête « protect » du serveur utilisateur distant SUD, lui demandant de protéger à distance le véhicule V. A la réception de cette requête, le serveur distant de gestion de véhicules SDGV envoie au dispositif de communication TCU un message inhibant le démarrage du véhicule V, c'est-à-dire que le démarrage du véhicule V nécessitera la réception d'un nouveau message d'autorisation comme le message M6 à l'étape E9.

L'étape suivante E15 est la condamnation du véhicule V à distance. Dans cette étape E15, le serveur distant de gestion de véhicules SDGV reçoit une requête « lock » du serveur utilisateur distant SUD, lui demandant de condamner à distance le véhicule V. En variante la réception de cette requête « lock » n'est pas nécessaire pour que le serveur distant de gestion de véhicules SDGV effectue l'étape E15 de condamnation à distance du véhicule V.

Le serveur distant de gestion de véhicules SDGV vérifie alors que la clef ou le badge du véhicule V se trouvent bien dans l'habitacle, en interrogeant le dispositif de communication TCU. Celui-ci communique avec un calculateur du véhicule, lui-même relié à un détecteur de badge, ou à un détecteur de clef. Il est à noter que certains véhicules ne sont pas équipés de détecteurs de clef. Dans ce cas la vérification de la présence de la clef dans l'habitacle est gérée par le serveur utilisateur distant SUD qui effectue cette vérification en interrogeant l'utilisateur U, par exemple avant l'envoi de la requête « lock ».

Si dans cette étape E15 la présence de la clef ou du badge dans l'habitacle est confirmée par le serveur distant de gestion de véhicules SDGV ou le serveur utilisateur distant SUD, alors le serveur distant de gestion de véhicules SDGV envoi un message au dispositif de communication TCU, lui demandant de condamner le véhicule V. Si les portières du véhicule ont bien été manuellement refermées, le véhicule V verrouille alors ses portes et on passe à l'étape E16. Si au contraire la présence de la clef ou du badge dans l'habitacle est invalidée, ou si une portière est mal fermée, l'utilisateur U est informé via son terminal mobile TM que la libération du véhicule n'est pas possible du fait de l'absence de clef dans l'habitacle, ou d'une portière mal fermée, et on réitère l'étape E15.

L'étape E16 est la libération du véhicule, qui est conditionnée au bon déroulement des étapes E12 à E15. Le serveur SUD arrête la taxation du service d'auto-partage ou de location pour l'utilisateur U.

Il est à noter que d'autres modes de réalisation du système de mise à disposition d'un véhicule selon l'invention et du procédé de mise à disposition d'un véhicule selon l'invention que celui décrit dans cette demande sont envisageables. Notamment les étapes E1 à E16 décrites dans ce mode de réalisation ne sont pas toutes indispensables pour réaliser l'invention, et certaines de ces étapes, ou la façon dont elles sont ordonnées, sont réalisables différemment. Par exemple les étapes E12 à E16 peuvent ne pas être implémentées, ou le véhicule V peut lui-même automatiquement remonter un inventaire du véhicule au serveur SDGV, verrouiller ses portières et interdire le démarrage du véhicule dès que celui-ci détecte, après une demande de libération du véhicule par l'utilisateur :
- un arrêt du ou des moteurs du véhicule,
- la présence de la clef de contact ou du badge du véhicule dans la boîte à gants,
- aucune présence dans l'habitacle,
- et la fermeture manuelle des portières du véhicule.
De même, la vérification de la valeur du kilométrage envoyée par l'utilisateur U au serveur utilisateur distant SUD est en variante effectuée par le serveur utilisateur distant SUD lui-même et non par le serveur distant de gestion de véhicules SDGV.

## Revendications

1. Procédé de mise à disposition d'un véhicule (V), comportant une étape (E3, E4) d'envoi d'un message (M2, M3) permettant la décondamnation d'au moins une portière du véhicule (V) depuis un serveur distant de gestion de véhicules (SDGV), suite à une requête utilisateur (M1), ladite requête utilisateur ayant fait l'objet d'une identification dudit utilisateur (U) et d'une autorisation d'utilisation par ledit utilisateur (U) dudit véhicule (V), ledit procédé comportant en outre une étape (E7, E9) d'envoi d'un message (M5, M6) indépendant dudit message (M2, M3) permettant ladite décondamnation, autorisant le démarrage du véhicule (V) auprès d'un système de contrôle (SC) dudit véhicule (V) depuis ledit serveur distant de gestion de véhicules (SDGV),
ledit procédé étant **caractérisé en ce que** l'identification et l'autorisation d'utilisation sont effectués par un serveur utilisateur distant (SUD) distinct dudit serveur distant de gestion de véhicules (SDGV),
- ledit message (M3) permettant la décondamnation d'au moins une portière étant envoyé par ledit serveur distant de gestion de véhicules (SDGV) audit véhicule (V) sur réception d'un message (M2) de décondamnation envoyé par ledit serveur utilisateur distant (SUD) après une étape (E2) de traitement de ladite requête utilisateur par ledit serveur utilisateur distant (SUD),
- ledit message (M6) autorisant le démarrage dudit véhicule (V) étant envoyé par ledit serveur distant de gestion de véhicules (SDGV) audit véhicule (V) sur réception d'un message (M5) de dé-protection envoyé par ledit serveur utilisateur distant (SUD),
lesdits messages de décondamnation (M2) et de dé-protection (M5) envoyés par ledit serveur utilisateur distant (SUD) audit serveur distant (SDGV) de gestion de véhicules étant dépourvus d'un identifiant dudit utilisateur.

2. Procédé de mise à disposition d'un véhicule (V) selon la revendication 1, **caractérisé en ce que** ledit serveur distant de gestion de véhicules (SDGV) n'envoie ledit message (M6) autorisant le démarrage dudit véhicule (V) que lorsque ledit serveur utilisateur distant (SUD) a reçu dudit utilisateur (U) une valeur d'un paramètre variable relatif audit véhicule (V), et **en ce que** ladite valeur correspond à une valeur précédemment enregistrée par ledit serveur distant de gestion de véhicules (SDGV) ou par ledit serveur utilisateur distant (SUD).

3. Procédé de mise à disposition d'un véhicule selon la revendication 1 ou 2, **caractérisé en ce que** ledit système de contrôle (SC) dudit véhicule (V) n'autorise le démarrage dudit véhicule (V) qu'après identification d'une clef ou d'un badge dudit véhicule, et réception par ledit véhicule (V) desdits messages (M3, M6) permettant la décondamnation d'au moins une portière et autorisant le démarrage dudit véhicule (V).

4. Procédé de mise à disposition d'un véhicule selon l'une quelconque des revendications 1 à 3, **caractérisé en ce que** ledit serveur distant de gestion de véhicules (SDGV) n'envoie ledit message (M6) autorisant le démarrage dudit véhicule (V) qu'après détection d'une ouverture manuelle d'une portière dudit véhicule (V).

5. Procédé de mise à disposition d'un véhicule selon l'une quelconque des revendications 1 à 4, **caractérisé en ce que** ledit serveur utilisateur distant (SUD) n'autorise pas la libération dudit véhicule (V) par ledit utilisateur (U) tant que ledit serveur utilisateur distant (SUD):
- Ne détecte pas la disponibilité d'un réseau de communication permettant audit véhicule (V) de communiquer avec ledit serveur distant de gestion de véhicules (SDGV),
- et/ou ne reçoit pas un message de validation d'inventaire de la part dudit utilisateur (U).

6. Procédé de mise à disposition d'un véhicule selon l'une quelconque des revendications 1 à 5, **caractérisé en ce qu'**il comporte une étape préalable de réservation dudit véhicule (V) par ledit utilisateur (U), au cours de laquelle ledit utilisateur (U) fournit audit serveur utilisateur distant (SUD) une valeur permettant de temporiser d'une durée prédéterminée l'envoi dudit message (M3) permettant la décondamnation d'au moins une portière du véhicule.

7. Procédé de mise à disposition d'un véhicule selon l'une quelconque des revendications 1 à 6, **caractérisé en ce que** l'étape d'envoi d'un message (M3) permettant la décondamnation d'au moins une portière du véhicule n'a lieu qu'après une étape de détermination de la distance entre l'utilisateur (U) et ledit véhicule (V), et si la distance déterminée lors de ladite étape de détermination est inférieure à un seuil prédéterminé.

8. Procédé de mise à disposition d'un véhicule selon l'une quelconque des revendications 1 à 7, **caractérisé en ce que** sur réception par ledit véhicule (V) dudit message (M3) permettant la décondamnation d'au moins une portière du véhicule, ledit véhicule (V) inhibe une fonction de signalisation visuelle et/ou sonore d'ouverture des portes.

9. Système (SYS) de mise à disposition d'un véhicule (V) comportant des moyens pour mettre en oeuvre le procédé de mise à disposition d'un véhicule (V) selon l'une quelconque des revendications 1 à 8, lesdits moyens comportant :
- un serveur utilisateur distant (SUD) apte à identifier un utilisateur (U) et à autoriser l'utilisation dudit véhicule (V) par ledit utilisateur sur réception d'une requête utilisateur (M1), et un serveur distant de gestion de véhicules (SDGV) distinct dudit serveur utilisateur distant (SUD), le dit serveur utilisateur distant (SUD) étant apte à communiquer avec le serveur distant de gestion de véhicules (SDGV),
- ledit serveur distant de gestion de véhicules (SDGV), apte à envoyer audit véhicule (V) un message (M3) permettant la décondamnation d'au moins une portière dudit véhicule (V) suite à la réception d'un message (M2) de décondamnation envoyé par ledit serveur utilisateur distant (SUD),
- ledit serveur distant de gestion de véhicules (SDGV) étant apte à envoyer audit véhicule (V) un message (M6) indépendant dudit message (M3) permettant ladite décondamnation, autorisant le démarrage dudit véhicule (V) auprès d'un système de contrôle (SC) dudit véhicule (V), sur réception d'un message (M5) de dé-protection envoyé par le serveur utilisateur distant (SUD).

10. Programme d'ordinateur comportant des instructions pour mettre en oeuvre le procédé de mise à disposition d'un véhicule (V) selon l'une quelconque des revendications 1 à 8, lorsqu'il est exécuté sur un ou plusieurs processeurs.

## Patentansprüche

1. Verfahren zum Bereitstellen eines Fahrzeugs (V), das einen Schritt (E3, E4) des Sendens einer Nachricht (M2, M3), welche die Entriegelung wenigstens einer Tür des Fahrzeugs (V) gestattet, von einem entfernten Fahrzeugverwaltungsserver (SDGV) aus im Anschluss an eine Benutzeranforderung (M1) umfasst, wobei diese Benutzeranforderung Gegenstand einer Identifikation des Benutzers (U) und einer Autorisierung der Benutzung des Fahrzeugs (V) durch den Benutzer (U) war, wobei das Verfahren außerdem einen Schritt (E7, E9) des Sendens einer von der die Entriegelung gestattenden Nachricht (M2, M3) unabhängigen Nachricht (M5, M6), welche das Starten des Fahrzeugs (V) bei einem Steuerungssystem (SC) des Fahrzeugs (V) autorisiert, von dem entfernten Fahrzeugverwaltungsserver (SDGV) aus umfasst,
wobei das Verfahren **dadurch gekennzeichnet ist, dass** die Identifikation und die Autorisierung der Benutzung durch einen entfernten Benutzerserver (SUD) erfolgen, der von dem entfernten Fahrzeugverwaltungsserver (SDGV) verschieden ist,
- wobei die Nachricht (M3), welche die Entriegelung wenigstens einer Tür gestattet, von dem entfernten Fahrzeugverwaltungsserver (SDGV) an das Fahrzeug (V) bei Empfang einer Entriegelungsnachricht (M2) gesendet wird, die von dem entfernten Benutzerserver (SUD) nach einem Schritt (E2) der Verarbeitung der Benutzeranforderung durch den entfernten Benutzerserver (SUD) gesendet wurde,
- wobei die Nachricht (M6), welche das Starten des Fahrzeugs (V) autorisiert, von dem entfernten Fahrzeugverwaltungsserver (SDGV) an das Fahrzeug (V) bei Empfang einer Schutzaufhebungsnachricht (M5) gesendet wird, die von dem entfernten Benutzerserver (SUD) gesendet wurde,
wobei die Entriegelungsnachricht (M2) und die Schutzaufhebungsnachricht (M5), die von dem entfernten Benutzerserver (SUD) an den entfernten Fahrzeugverwaltungsserver (SDGV) gesendet werden, nicht mit einer Kennung des Benutzers versehen sind.

2. Verfahren zum Bereitstellen eines Fahrzeugs (V) nach Anspruch 1, **dadurch gekennzeichnet, dass** der entfernte Fahrzeugverwaltungsserver (SDGV) die Nachricht (M6), welche das Starten des Fahrzeugs (V) autorisiert, nur dann sendet, wenn der entfernte Benutzerserver (SUD) von dem Benutzer (U) einen Wert eines das Fahrzeug (V) betreffenden Parameters empfangen hat, und dadurch, dass dieser Wert einem Wert entspricht, der zuvor von dem entfernten Fahrzeugverwaltungsserver (SDGV) oder von dem entfernten Benutzerserver (SUD) registriert wurde.

3. Verfahren zum Bereitstellen eines Fahrzeugs nach Anspruch 1 oder 2, **dadurch gekennzeichnet, dass** das Steuerungssystem (SC) des Fahrzeugs (V) das Starten des Fahrzeugs (V) erst nach Identifikation eines Schlüssels oder einer Chipkarte des Fahrzeugs und Empfang der Nachrichten (M3, M6), welche die Entriegelung wenigstens einer Tür gestatten und das Starten des Fahrzeugs (V) autorisieren, durch das Fahrzeug (V) autorisiert.

4. Verfahren zum Bereitstellen eines Fahrzeugs nach einem der Ansprüche 1 bis 3, **dadurch gekennzeichnet, dass** der entfernte Fahrzeugverwaltungsserver (SDGV) die Nachricht (M6), welche das Starten des Fahrzeugs (V) autorisiert, erst nach Erkennung eines manuellen Öffnens einer Tür des Fahrzeugs (V) autorisiert.

5. Verfahren zum Bereitstellen eines Fahrzeugs nach einem der Ansprüche 1 bis 4, **dadurch gekennzeichnet, dass** der entfernte Benutzerserver (SUD) die Freigabe des Fahrzeugs (V) durch den Benutzer (U) nicht autorisiert, solange der entfernte Benutzerserver (SUD):
- nicht die Verfügbarkeit eines Kommunikationsnetzes erkennt, welches dem Fahrzeug (V) ermöglicht, mit dem entfernten Fahrzeugverwaltungsserver (SDGV) zu kommunizieren,
- und/oder keine Nachricht zur Validierung des Inventars seitens des Benutzers (U) empfängt.

6. Verfahren zum Bereitstellen eines Fahrzeugs nach einem der Ansprüche 1 bis 5, **dadurch gekennzeichnet, dass** es einen vorangehenden Schritt der Reservierung des Fahrzeugs (V) durch den Benutzer (U) umfasst, in welchem der Benutzer (U) dem entfernten Benutzerserver (SUD) einen Wert liefert, der es ermöglicht, das Senden der Nachricht (M3), die das Entriegeln wenigstens einer Tür des Fahrzeugs ermöglicht, um eine vorbestimmte Dauer zu verzögern.

7. Verfahren zum Bereitstellen eines Fahrzeugs nach einem der Ansprüche 1 bis 6, **dadurch gekennzeichnet, dass** der Schritt des Sendens einer Nachricht (M3), welche die Entriegelung wenigstens einer Tür des Fahrzeugs gestattet, erst nach einem Schritt der Bestimmung der Entfernung zwischen dem Benutzer (U) und dem Fahrzeug (V), und falls die in diesem Schritt der Bestimmung bestimmte Entfernung kleiner als ein vorbestimmter Schwellenwert ist, ausgeführt wird.

8. Verfahren zum Bereitstellen eines Fahrzeugs nach einem der Ansprüche 1 bis 7, **dadurch gekennzeichnet, dass** bei Empfang der Nachricht (M3), welche die Entriegelung wenigstens einer Tür des Fahrzeugs gestattet, durch das Fahrzeug (V) das Fahrzeug (V) eine Funktion der visuellen und/oder akustischen Signalisierung des Öffnens der Türen hemmt.

9. System (SYS) zum Bereitstellen eines Fahrzeugs (V), welches Mittel zum Durchführen des Verfahrens zum Bereitstellen eines Fahrzeugs (V) nach einem der Ansprüche 1 bis 8 aufweist, wobei die Mittel umfassen:
- einen entfernten Benutzerserver (SUD), der geeignet ist, bei Empfang einer Benutzeranforderung (M1) einen Benutzer (U) zu identifizieren und die Benutzung des Fahrzeugs (V) durch den Benutzer (U) zu autorisieren, und einen entfernten Fahrzeugverwaltungsserver (SDGV), der von dem entfernten Benutzerserver (SUD) verschieden ist, wobei der entfernte Benutzerserver (SUD) geeignet ist, mit dem entfernten Fahrzeugverwaltungsserver (SDGV) zu kommunizieren,
- wobei der entfernte Fahrzeugverwaltungsserver (SDGV) geeignet ist, im Anschluss an den Empfang einer Entriegelungsnachricht (M2), die von dem entfernten Benutzerserver (SUD) gesendet wurde, an das Fahrzeug (V) eine Nachricht (M3) zu senden, welche die Entriegelung wenigstens einer Tür des Fahrzeugs (V) gestattet,
- wobei der entfernte Fahrzeugverwaltungsserver (SDGV) geeignet ist, bei Empfang einer Schutzaufhebungsnachricht (M5), die von dem entfernten Benutzerserver (SUD) gesendet wurde, an das Fahrzeug (V) eine von der die Entriegelung gestattenden Nachricht (M3) unabhängige Nachricht (M6) zu senden, welche das Starten des Fahrzeugs (V) bei einem Steuerungssystem (SC) des Fahrzeugs (V) autorisiert.

10. Computerprogramm, welches Anweisungen zur Durchführung des Verfahrens zum Bereitstellen eines Fahrzeugs (V) nach einem der Ansprüche 1 bis 8, wenn es auf einem oder mehreren Prozessoren ausgeführt wird, umfasst.

## Claims

1. Method for making a vehicle (V) available, including a step (E3, E4) for sending a message (M2, M3) allowing the unlocking of at least one door of the vehicle (V) from a remote vehicle management server (SDGV), in response to a user request (M1), said user request having formed the subject of an identification of said user (U) and of an authorization of use by said user (U) of said vehicle (V),
said method additionally including a step (E7, E9) for sending a message (M5, M6), independent of said message (M2, M3) allowing said unlocking, authorizing the starting of the vehicle (V) by a control system (SC) of said vehicle (V) from said remote vehicle management server (SDGV),
said method being **characterized in that** the identification and authorization of use are carried out by a remote user server (SUD) which is separate from said remote vehicle management server (SDGV),
- said message (M3) allowing the unlocking of at least one door being sent by said remote vehicle management server (SDGV) to said vehicle (V) upon reception of an unlock message (M2) sent by said remote user server (SUD) after a step (E2) for processing said user request by said remote user server (SUD),
- said message (M6) authorizing the starting of said vehicle (V) being sent by said remote vehicle management server (SDGV) to said vehicle (V) upon reception of an unprotect message (M5) sent by said remote user server (SUD),
said unlock (M2) and unprotect (M5) messages sent by said remote user server (SUD) to said remote vehicle management server (SDGV) lacking an identifier of said user.

2. Method for making a vehicle (V) available according to Claim 1, **characterized in that** said remote vehicle management server (SDGV) sends said message (M6) authorizing the starting of said vehicle (V) only when said remote user server (SUD) has received from said user (U) a value of a variable parameter relating to said vehicle (V), and **in that** said value corresponds to a value previously recorded by said remote vehicle management server (SDGV) or by said remote user server (SUD).

3. Method for making a vehicle available according to Claims 1 or 2, **characterized in that** said control system (SC) of said vehicle (V) authorizes the starting of said vehicle (V) only after a key or a fob of said vehicle is identified, and after said vehicle (V) receives said messages (M3, M6) allowing the unlocking of at least one door and authorizing the starting of said vehicle (V).

4. Method for making a vehicle available according to any one of Claims 1 to 3, **characterized in that** said remote vehicle management server (SDGV) sends said message (M6) authorizing the starting of said vehicle (V) only after a manual opening of a door of said vehicle (V) is detected.

5. Method for making a vehicle available according to any one of Claims 1 to 4, **characterized in that** said remote user server (SUD) does not authorize the release of said vehicle (V) by said user (U) until said remote user server (SUD):
- detects the availability of a communication network allowing said vehicle (V) to communicate with said remote vehicle management server (SDGV),
- and/or receives an inventory validation message from said user (U).

6. Method for making a vehicle available according to any one of Claims 1 to 5, **characterized in that** it includes a step prior to the booking of said vehicle (V) by said user (U), during which said user (U) supplies to said remote user server (SUD) a value for delaying by a predetermined duration the sending of said message (M3) allowing the unlocking of at least one door of the vehicle.

7. Method for making a vehicle available according to any one of Claims 1 to 6, **characterized in that** the step for sending a message (M3) allowing the unlocking of at least one door of the vehicle takes place only after a step for determining the distance between the user (U) and said vehicle (V), and if the distance determined during said determination step is less than a predetermined threshold.

8. Method for making a vehicle available according to any one of Claims 1 to 7, **characterized in that** upon reception by said vehicle (V) of said message (M3) allowing the unlocking of at least one door of the vehicle, said vehicle (V) inhibits a visual and/or audible door-opening indicating function.

9. System (SYS) for making a vehicle (V) available including means for implementing the method for making a vehicle (V) available according to any one of Claims 1 to 8, said means including:
- a remote user server (SUD) suitable for identifying a user (U) and for authorizing the use of said vehicle (V) by said user upon reception of a user request (M1), and a remote vehicle management server (SDGV) which is separate from said remote user server (SUD), said remote user server (SUD) being suitable for communicating with the remote vehicle management server (SDGV),
- said remote vehicle management server (SDGV) being suitable for sending to said vehicle (V) a message (M3) allowing the unlocking of at least one door of said vehicle (V) in response to the reception of an unlock message (M2) sent by said remote user server (SUD),
- said remote vehicle management server (SDGV) being suitable for sending to said vehicle (V) a message (M6) independent of said message (M3) allowing said unlocking, authorizing the starting of said vehicle (V) by a control system (SC) of said vehicle (V), upon reception of an unprotect message (M5) sent by the remote user server (SUD).

10. Computer program including instructions for implementing the method for making a vehicle (V) available according to any one of Claims 1 to 8, when it is executed on one or more processors.
